Europäisches Patentamt

(19) European Patent Office

Office européen des brevets

(11) Numéro de publication : **0 280 607 B1**

(12) **FASCICULE DE BREVET EUROPEEN**

(45) Date de publication du fascicule du brevet :
09.10.91 Bulletin 91/41

(51) Int. Cl.$^5$ : **F16L 59/08**

(21) Numéro de dépôt : **88400294.0**

(22) Date de dépôt : **09.02.88**

(54) **Dispositif d'isolation thermique comportant des éléments réflecteurs du rayonnement et un matériau isolant de la conduction.**

(30) Priorité : **13.02.87 FR 8701866**

(43) Date de publication de la demande :
**31.08.88 Bulletin 88/35**

(45) Mention de la délivrance du brevet :
**09.10.91 Bulletin 91/41**

(84) Etats contractants désignés :
**BE DE ES FR GB IT NL**

(56) Documents cités :
**DE-A- 2 750 457
FR-A- 1 545 706
FR-A- 2 382 642**

(73) Titulaire : **BRONZAVIA AERONAUTIQUE
2/10, rue Jean-Perrin
F-92000 Nanterre (FR)**

(72) Inventeur : **Joly, Claude
THOMSON-CSF SCPI 19, avenue de Messine
F-75008 Paris (FR)**

(74) Mandataire : **Dawidowicz, Armand
Cabinet Dawidowicz 18, Boulevard Pereire
F-75017 Paris (FR)**

## Description

L'invention a pour objet un dispositif d'isolation thermique léger comportant des éléments réflecteurs de rayonnement, notamment le rayonnement infrarouge et un matériau isolant de la conduction et qui est efficace à des températures élevées, c'est-à-dire de l'ordre de 800°C au moins.

En raison de sa légèreté et de son efficacité, un tel dispositif est utilisable tout particulièrement dans le domaine aéronautique, pour la protection thermique mais peut l'être dans de nombreux autres domaines d'application dans lesquels les conditions de légèreté et d'efficacité sont requises simultanément ou bien dans lesquels simplement l'efficacité est requise.

Des dispositifs de ce genre sont connus dans lesquels au moins un écran réflecteur est intercalé entre deux couches d'un matériau isolant tel que de la laine de quartz ou de la laine minérale. Le matériau isolant s'oppose à la transmission de chaleur par conduction mais, en raison de sa faible compacité, il n'est pas opaque au rayonnement et c'est pourquoi des écrans réflecteurs sont intercalés pour compléter l'action du matériau isolant. Les écrans réflecteurs sont par exemple à base d'un métal dont les propriétés ne sont pas altérées aux températures d'utilisation.

Un dispositif particulier est connu du Brevet français délivré n° 1545706, dans lequel un écran réflecteur est constitué d'une feuille de mica revêtue d'une couche mince d'or.

Cependant, ces dispositifs connus présentent divers inconvénients car d'une part les écrans sont relativement lourds et d'autre part, selon la matière dont ils sont constitués, ils sont trop rigides ou trop cassants. En conséquence, ils ne peuvent pas être utilisés dans n'importe quelle configuration ou sous n'importe quelles contraintes mécaniques. Enfin, dans le cas particulier du Brevet français n° 1545706, un inconvénient supplémentaire tient au fait qu'il est nécessaire de réaliser les feuilles de mica servant de support à l'or par clivage, puis collage de feuilles élémentaires de mica entre eux, préalablement au dépôt de la couche mince. De plus, si la surface réfléchissante doit être trop importante, il faut coller entre elles plusieurs feuilles ainsi réalisées avant de les revêtir d'or.

Le collage du mica est une opération délicate car il faut trouver un matériau collant résistant à la température d'utilisation, et sous l'influence des vibrations ou des contraintes extérieures, les feuilles demeurent relativement cassantes, surtout si leur surface est importante.

On connaît également, par DE-A-2750457, une structure d'isolation thermique comprenant une chambre hermétique contenant des particules de faible densité et un gaz de faible conductivité. Dans une forme de réalisation, ce brevet prévoit que certaines des particules ou toutes les particules sont recouvertes ou constituées d'or et/ou d'aluminium. Ces particules sont alors réfléchissantes mais leur répartition dans la masse gazeuse est aléatoire et, en conséquence, l'action réfléchissante vis-à-vis du rayonnement incident n'est pas satisfaisante. En outre, l'utilisation d'un support isolant gazeux nécessite l'utilisation d'une enceinte fermée étanche qui augmente le coût et la fragilité de la structure isolante.

L'invention a donc pour but un dispositif d'isolation thermique léger, qui demeure résistant et efficace à haute température, indépendamment des contraintes auxquelles il est soumis.

Selon l'invention, un dispositif d'isolation thermique constitué d'une pluralité de paillettes réfléchissantes du rayonnement insérées et réparties dans un matériau isolant de la conduction est caractérisé en ce que lesdites paillettes sont préorientées en juxtaposition et en recouvrement partiels les unes par rapport aux autres, de façon que leur plus grande face soit sensiblement orthogonale à la direction principale du rayonnement incident frappant le dispositif.

Ce dispositif permet de supprimer les écrans réflecteurs et entraîne une réduction de poids non négligeable car pour obtenir un même rendement en réflexion, on utilise un volume total de paillettes moins important que celui d'un écran, donc un poids total inférieur. D'autre part, si le matériau isolant dans lequel sont insérées les paillettes est souple, il devient possible de déformer l'ensemble du dispositif sans subir les problèmes dûs à la rigidité ou, au contraire, au manque de solidité des écrans réfléchissants connus de l'art antérieur, puisqu'avec la présente invention, la réflexion du rayonnement est obtenue par une multitude de petits miroirs constitués chacun par une paillette.

La juxtaposition et le recouvrement partiels des paillettes les unes par rapport aux autres évitent qu'une fraction du rayonnement traverse l'épaisseur du dispositif.

Enfin, le maintien des paillettes est assuré par le matériau isolant lui-même.

D'autres caractéristiques et avantages de l'invention apparaîtront avec la description ci-après de quelques modes de réalisation, faite en regard des figures annexées qui représentent :

— La figure 1, un schéma de principe du fonctionnement du dispositif conforme à l'invention ;

— Les figures 2 et 3, deux variantes du dispositif.

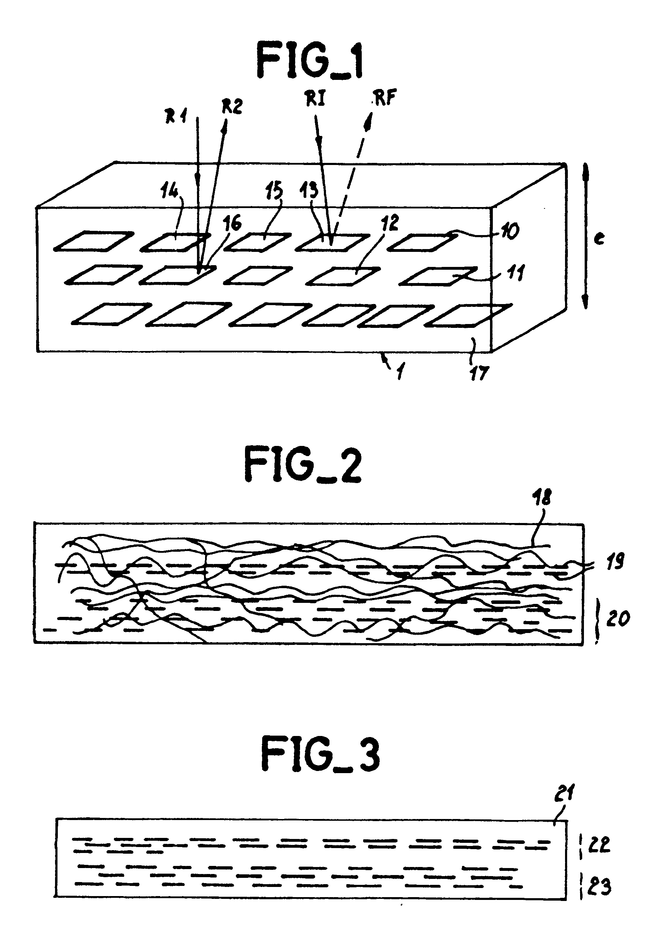

Sur la figure 1, on a représenté le schéma de principe d'un dispositif 1 d'isolation thermique conforme à l'invention. Ce dispositif 1 comporte une multitude de paillettes réfléchissantes 10, 11, 12, 13, 14, 15, 16 insérées et réparties dans l'épaisseur du matériau 17 isolant de la conduction thermique.

La répartition des paillettes est telle qu'il existe une juxtaposition entre certaines 10, 13 et 11, 12 d'entre elles ainsi qu'un recouvrement au moins partiel entre d'autres 10, 11, ou 10, 12 ou 14, 16 ou 15, 16 par exemple. Cette structure a pour effet de s'opposer totalement au passage du rayonnement incident RI qui est alors réfléchi RF. Le recouvrement permet qu'un rayon R1 qui serait passé entre des paillettes juxtaposées 14,15 soit réfléchi R2 par la ou les paillettes 16 que ces paillettes juxtaposées recouvrent.

Les paillettes sont disposées de façon à occulter toute la surface offerte au rayonnement ou, de préférence, toute la surface du dispositif devant faire obstacle au rayonnement. En effet, on peut envisager, pour des applications particulières à ménager des fenêtres dans le dispositif pour laisser passer une partie du rayonnement.

Bien entendu, cette figure 1 n'est qu'une illustration du principe, et les dimensions ne sont pas à l'échelle, en particulier celles des paillettes. Notamment, le dispositif se présente sous la forme d'un panneau qui peut être souple ou rigide selon la consistance du matériau isolant, et les dimensions de ce panneau sont en réalité telles que son épaisseur e dans laquelle sont disposées les paillettes est nettement inférieure aux autres dimensions du panneau qui déterminent le plan orthogonal au rayonnement. L'épaisseur totale d'un dispositif efficace peut être inférieure à 1 cm, alors que les autres dimensions peuvent être quelconques, et dépendent uniquement de la surface de la zone que le dispositif est destiné à protéger ou isoler.

De préférence, les paillettes sont préorientées comme le montre cette figure 1, de façon que leur plus grande face soit sensiblement orthogonale à la direction principale du rayonnement incident, afin que le pouvoir réfléchissant de chaque paillette soit exploité au maximum, pour conférer un rendement optimal au dispositif.

La préorientation et la répartition des paillettes peuvent être effectuées de la façon suivante : les paillettes sont réparties uniformément sur un support plan, de façon à constituer une nappe qui de préférence est rendue cohérente à l'aide d'un liant provisoire ou par agglomération afin de permettre sa manipulation pour sa mise en place dans le matériau isolant de la conduction. Dans d'autres cas, on utilise les propriétés électrostatiques pour réaliser l'assemblage des paillettes entre elles avant leur mise en place. Cette nappe est alors placée sur une première épaisseur de matériau isolant, et on vient placer une seconde épaisseur de matériau sur la nappe pour la maintenir en place. A ce moment peut survenir un clivage de la nappe ou une dissolution du liant, qui entraîne une séparation des paillettes qui peut faire apparaître des trous dans la nappe. Afin d'annuler l'effet néfaste de ces trous, qui auraient tendance à lasser passer le rayonnement, on place alors au moins une autre nappe soit directement sur la première nappe, soit sur l'une des épaisseurs de matériau isolant adjacente à la première nappe, de sorte que par recouvrements successifs, le passage du rayonnement devient impossible.

Egalement, une même nappe peut être réalisée à l'aide de plusieurs couches successives de paillettes pour éviter l'apparition de trous lors du clivage ou de la dissolution du liant, de sorte qu'une seule nappe ainsi constituée peut suffir à arrêter le rayonnement, même après clivage ou dissolution.

Dans un mode de réalisation préféré, les paillettes ont chacune une épaisseur de l'ordre du micron, et une surface de l'ordre de quelques centièmes de millimètre carré.

La figure 2 représente une coupe d'un mode de réalisation dans lequel le matériau isolant 18 de la conduction est une laine isolante telle que de la laine minérale, de quartz, de la laine organique ou autre, constituée de fibres longues.

Les paillettes sont réparties selon des nappes 19 réparties entre deux couches successives de fibres 18, comme représentées en zone supérieure de la figure 2, et/ou les paillettes sont insérées entre les fibres sans être constituées en nappes comme représentées en zone inférieure 20 de cette figure 2.

Ainsi, le dispositif peut se présenter sous la forme d'un matelas de laine isolante dans lequel se trouvent intercalées des nappes de paillettes, ou bien sous la forme d'un matelas de laine entre les fibres duquel sont insérées des paillettes, ou bien encore sous la forme d'un matelas emprisonnant des paillettes dans ses fibres, et comportant de plus des nappes constituées de paillettes, entre deux couches de fibres.

Ce type de réalisation, à base de laine isolante est tout particulièrement adapté pour la constitution de dispositifs souples efficaces à des hautes températures.

La figure 3 schématise une variante dans laquelle le matériau isolant 21 de la conduction est une résine ou un autre liant. Dans cette variante, les paillettes sont extrêmement bien tenues puisque le liant ou la résine passe partout. Là encore, elles peuvent être réparties comme dans la variante de la figure 2, c'est-à-dire soit en nappes 22, ou d'une façon plus homogène 23 dans l'ensemble du volume du matériau isolant.

Dans les divers modes de réalisation, les paillettes peuvent être constituées simplement par un matériau réfléchissant tel qu'un métal réduit en paillettes. Cette solution est intéressante dans les cas où le matériau se clive facilement, ou bien encore n'est pas trop coûteux.

Dans d'autres cas, on emploie un matériau facilement clivable, donc réductible en paillettes, comme support d'un matériau réfléchissant. Cette seconde solution est avantageuse dans les cas où le matériau réfléchissant est coûteux ou difficilement clivable.

Aussi, dans un mode de réalisation conforme à cette seconde solution, les éléments réfléchissants sont constitués de paillettes de mica revêtues d'or. Le dépôt d'or peut être effectué par des procédés physico-chimiques connus en soi. Ce type de paillettes à base de mica revêtu d'or possède des propriétés électrostatiques particulières qui permettent la réalisation des nappes sans l'emploi de liant, préalablement à leur mise en place dans le matériau isolant de la conduction.

## Revendications

1. Dispositif (1) d'isolation thermique constitué d'une pluralité de paillettes réfléchissantes (10, 11... 15, 16) du rayonnement insérées et réparties dans un matériau isolant (17) de la conduction, caractérisé en ce que lesdites paillettes (10, 11... 15, 16) sont préorientées en juxtaposition et en recouvrement partiel les unes par rapport aux autres de façon que leur plus grande face soit sensiblement orthogonale à la direction principale du rayonnement incident (RI) frappant le dispositif.

2. Dispositif selon la revendication 1, caractérisé en ce que les paillettes sont réparties en forme de nappes (19, 22) ou de couches placées entre deux épaisseurs de matériau isolant.

3. Dispositif selon la revendication 2, caractérisé en ce que les nappes ou les couches sont réalisées, préalablement à leur mise en place entre deux épaisseurs de matériau isolant, à l'aide de paillettes agglomérées et/ou maintenues à l'aide d'un liant provisoire et/ou maintenues par leurs propriétés électrostatiques.

4. Dispositif selon la revendication 1, caractérisé en ce que les paillettes sont réparties (20, 23) dans l'ensemble du volume du matériau isolant.

5. Dispositif selon l'une des revendications 1 à 4 précédentes, caractérisé en ce que le matériau isolant est un matelas à base de fibres longues (18) organiques et/ou minérales, et en ce qu'au moins une couche (19) ou nappe de paillettes est intercalée entre deux épaisseurs de fibres.

6. Dispositif selon l'une des revendications 1 à 4 précédentes, caractérisé en ce que le matériau isolant est un matelas à base de fibres longues (18) organiques et/ou minérales et en ce que les paillettes sont réparties (20) de façon homogène entre lesdites fibres.

7. Dispositif selon l'une des revendications 1 à 4, caractérisé en ce que le matériau isolant est un liant (21) tel qu'une résine ou une colle dont la tenue mécanique et le pouvoir isolant sont conservés à la température d'utilisation du dispositif.

8. Dispositif selon l'une des revendications 1 à 7, caractérisé en ce que les paillettes sont à base d'un métal réfléchissant.

9. Dispositif selon l'une des revendications 1 à 7, caractérisé en ce que les paillettes sont constituées à partir de paillettes d'un matériau support revêtues d'un matériau réfléchissant.

10. Dispositif selon la revendication 9, caractérisé en ce que les paillettes sont constituées à partir de paillettes de mica revêtues d'or.

## Patentansprüche

1. Thermische Isolationsvorrichtung (1), bestehend aus einer Vielzahl von Rückstrahlungselementen (10, 11... 15, 16) und verteilt in einem Isolationsmaterial (17) gegen Wärmeleitung, **dadurch gekennzeichnet**, daß die genannten Elemente (10, 11... 15, 16) nebeneinander vororientiert sind und sich teilweise überlappen, so daß die größte Seite im wesentlichen orthogonal zur Hauptrichtung der auf die Vorrichtung auftreffenden Strahlung (RI) verläuft.

2. Vorrichtung nach Anspruch 1, **dadurch gekennzeichnet**, daß die Elemente in Form von Lamellen (19, 22) oder Schichten verteilt sind, die zwischen zwei Dicken des Isolationsmaterials angeordnet sind.

3. Vorrichtung nach Anspruch 2, **dadurch gekennzeichnet**, daß die Lamellen oder Schichten vor dem Einbau zwischen zwei Dicken von Isolationsmaterial mit Hilfe von Elementen hergestellt werden, die mit Hilfe eines provisorischen Bindemittels agglomeriert und/oder festgehalten und/oder aufgrund der eingenen elektrostatischen Eigenschaften festgehalten werden.

4. Vorrichtung nach Anspruch 1, **dadurch gekennzeichnet**, daß die Elemente im gesamten Volumen des Isolationsmaterials verteilt (20, 23) sind.

5. Vorrichtung nach einem der vorherigen Ansprüche 1 bis 4, **dadurch gekennzeichnet**, daß das Isolationsmaterial ein Polster aus langen organischen und/oder mineralischen Fasern (18) ist und daß wenigstens eine Lage (19) oder Schicht von Plättchen zwischen zwei Faserdicken eingefügt sind.

6. Vorrichtung nach einem der vorherigen Ansprüche 1 bis 4, **dadurch gekennzeichnet**, daß das Isolationsmaterial ein Polster aus langen organischen und/oder mineralischen Fasern (18) ist und daß die Elemente homogen zwischen den genannten Fasern verteilt (20) sind.

7. Vorrichtung nach einem der Ansprüche 1 bis 4, **dadurch gekennzeichnet**, daß das Isolationsmaterial ein Bindemittel (21) wie z.B. ein Harz oder ein Leim ist, dessen mechanische Festigkeit und dessen Isoliervermögen bei der Gebrauchstemperatur der Vorrichtung erhalten bleiben.

8. Vorrichtung nach einem der Ansprüche 1 bis 7, **dadurch gekennzeichnet**, daß die Elemente auf der Grundlage eines reflektierenden Metalls hergestellt werden.

9. Vorrichtung nach einem der Ansprüche 1 bis 7, **dadurch gekennzeichnet**, daß die Elemente aus Plättchen aus einem Trägermaterial, versehen mit einem reflektierenden Material, bestehen.

10. Vorrichtung nach Anspruch 9, **dadurch gekennzeichnet**, daß die Elemente aus Plättchen von goldbeschichtetem Glimmer bestehen.

## Claims

1. A heat-insulation device (1) made of a plurality of radiation reflecting flakes (10, 11... 15, 16) inserted into and distributed through the conduction-insulating material (17), characterized in that said flakes (10, 11... 15, 16) are pre-oriented by being juxtaposed and partially overlapping each other so that their largest side is substantially orthogonal to the main direction of the incident radiation (IR) that strikes the device.

2. A device according to claim 1, characterized in that the flakes are distributed in the form of sheets (19, 22) or layers placed between two thicknesses of the insulating material.

3. A device according to claim 2, characterized in that the sheets or layers are made, prior to being put in position between two thicknesses of the insulating material, with flakes which are agglomerated and/or held in position by means of a provisional binder and/held in position by their electrostatic properties.

4. A device according to claim 1, characterized in that the flakes are distributed (20, 23) throughout the volume of the insulating material.

5. A device according to one of the preceding claims 1 to 4, characterized in that the insulating material is a mat made of organic and/or mineral long fibers (18), and in that at least one sheet (19) or layer of flakes is interposed between two thicknesses of fibers.

6. A device according to one of the preceding claims 1 to 4, characterized in that the insulating material is a mat made of long organic and/mineral fibers (18) and in that the flakes are distributed (20) homogeneously between said fibers.

7. A device according to one of claims 1 to 4, characterized in that the insulating material is a binder (21) such as a resin or a glue the mechanical behaviour and the insulating power of which are preserved at the temperature of use of the device.

8. A device according to one of claims 1 to 7, characterized in that the flakes are made of a reflecting metal.

9. A device according to one of claims 1 to 7, characterized in that the flakes consist of flakes of a supporting material coated with a reflecting material.

10. A device according to claim 9, characterized in that the flakes consist of gold-coated mica flakes.

# FIG_1

# FIG_2

# FIG_3